# FASCICULE DE BREVET EUROPEEN

(11) **EP 0 675 651 B1**
(45) Date de publication et mention de la délivrance du brevet: **17.10.2001**
(21) Numéro de dépôt: 95400648.2
(22) Date de dépôt: 23.03.1995
(51) Int. Cl.: H04N 7/14, H04N 7/60, H04N 7/26, H04N 7/50

(54) **Procédé et appareil de restitution d'une séquence d'images numérisées reçues d'une source distante**
Verfahren und Vorrichtung zur Wiedergabe einer von einer entfernten Quelle empfangenen digitalen Bildfolge
Method and apparatus for displaying a sequence of digital images received from a distant source

(30) Priorité: 28.03.1994 FR 9403600
(43) Date de publication de la demande: 04.10.1995
(73) Titulaire: ALCATEL BUSINESS SYSTEMS, F-75008 Paris (FR); FRANCE TELECOM, 75015 Paris (FR)
(72) Inventeur: Daniel, Patrick, F-67400 Illkirch (FR); Szychowiak, Piotr, F-67400 Illkirch (FR); Houdoin, Thierry, F-22301 Lannion Cedex (FR)
(74) Mandataire: Schaub, Bernard

(56) Documents cités:
- EP-A- 0 309 280
- EP-A- 0 397 206
- EP-A- 0 562 221
- WO-A-93/20652
- US-A- 3 073 896
- US-A- 4 710 812
- PATENT ABSTRACTS OF JAPAN vol. 15 no. 486 (E-1143) ,10 Décembre 1991 & JP-A-03 211984 (HITACHI LTD.) 17 Septembre 1991,

## Description

L'invention concerne un procédé et un appareil, notamment de type visiophone, destinés à permettre la restitution d'une séquence d'images animées à un rythme permettant une restitution réaliste et quasi-immédiate des animations figurant dans la séquence à partir d'une suite d'images constitutives successivement fournies, sous une forme numérisée, par une source distante.

Le document EP-A-309280 décrit un codeur vidéo permettant de coder numériquement les signaux d'image en vue d'une restitution des images sous une forme animée, après transmission sous forme codée.

De manière connue, la prise de vue d'une séquence au moyen d'une caméra conduit à la réalisation d'une suite d'images constituant des entités distinctes qui sont destinées à être ultérieurement visualisées en succession à un rythme déterminé permettant de restituer les éventuels mouvements d'animation de ce qui a été filmé pendant la séquence. Lorsque, par exemple, la prise de vue est effectuée à l'aide d'une caméra de télévision, les signaux représentatifs de chaque image sont obtenus par une analyse d'une cible photosensible qui est incluse dans un analyseur et sur laquelle une image de ce qui est filmé est produite par un objectif de la caméra. Cette analyse, de type balayage, est effectuée à un rythme et dans des conditions déterminées et le signal d'image obtenu est traité de manière à pouvoir être transmis à un appareil, distant, qui comporte ou constitue un récepteur d'images.

Il est couramment prévu une analyse des images à la cadence de vingt-cinq ou trente images par seconde pour permettre la saisie des éventuels mouvements de ce qui est filmé et ultérieurement une restitution réaliste de ces mouvements au niveau d'un appareil récepteur. Il est usuel de doubler la cadence des images à la restitution pour éliminer d'éventuels phénomènes visuels de papillotement gênants pour les observateurs. Dans le cas d'images restituées au moyen d'un appareil, de type téléviseur, chaque image reproduite est habituellement reconstituée en deux phases, au cours de deux trames successives, l'une pour les lignes paires de balayage de l'écran de l'appareil récepteur et l'autre pour les lignes impaires.

La restitution des mouvements implique que l'appareil récepteur puisse produire les images d'une suite à un rythme qui corresponde à celui du filmage.

Il est classique d'ajouter des impulsions de synchronisation au signal d'image émis par la caméra, notamment au niveau des débuts de ligne et des débuts de trame d'image, pour permettre à l'appareil récepteur de se synchroniser. Lorsque la transmission est effectuée de manière à permettre une visualisation quasi-immédiate des images émises, comme cela est en matière de télévision ou en visiophonie, il est habituellement prévu une synchronisation de l'appareil récepteur par rapport à une horloge régissant les émissions d'image de la source. Cette synchronisation s'effectue par exemple par l'intermédiaire d'un dispositif numérique à boucle de verrouillage de phase, lorsque les images sont transmises par voie synchrone et sous une forme numérisée. Toutefois, cette solution généralement satisfaisante n'est pas toujours applicable, en particulier lorsque la transmission entre une source et un appareil récepteur est susceptible de s'effectuer sur au moins une partie de son trajet par l'intermédiaire de moyens qui n'assurent pas systématiquement une transmission appropriée des signaux de synchronisation générés par l'horloge de la source à l'appareil récepteur. Ceci est en particulier le cas, lorsque la succession d'images constitutives d'une séquence émanant d'une source est transmise, sur au moins une partie de son trajet, par une voie établie au travers d'un réseau temporel asynchrone. Un décodeur vidéo pour images transmises par l'intermédiaire d'un tel réseau est décrit dans le document EP-A-562221.

Il est possible, notamment dans un tel cas, que les images numérisées d'une séquence émise par une source n'aient qu'approximativement le rythme normalement prévu pour leur restitution au niveau de l'appareil récepteur, même si le rythme d'émission de ces images par la source est correct.

Il est aussi envisageable que le rythme d'émission d'images par la source ne soit que dans une gamme de tolérance admise sans être exactement celui normalement attendu par l'appareil récepteur.

La présente invention propose donc un procédé et un appareil comme décrit dans les revendications.

L'invention, ses caractéristiques et ses avantages sont précisés dans la description qui suit en liaison avec les figures évoquées ci-dessous.

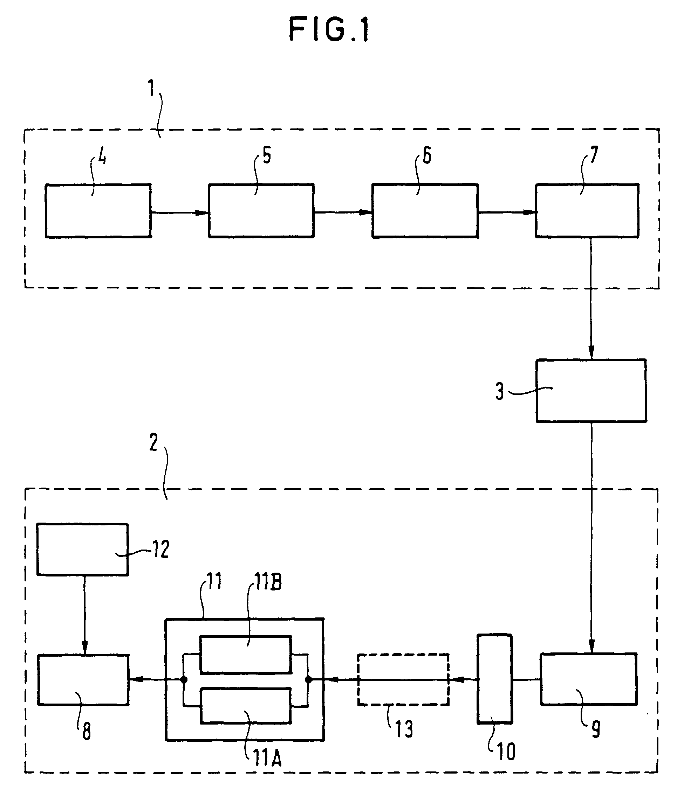

La figure 1 présente un schéma de principe d'un exemple de chaîne de transmission d'images, relatives à des séquences filmées, entre une source et un appareil récepteur d'images.

Les diagrammes 2A, 2B, 2C, 2D présentent un premier exemple de restitution d'images en application du procédé selon l'invention.

Les diagrammes 3A, 3B, 3C, 3D présentent un second exemple de restitution dans un cas où il existe un glissement entre horloge de source et horloge d'appareil récepteur.

Les diagrammes 4A, 4B, 4C, 4D présentent un troisième exemple de restitution dans un cas où la transmission des images est perturbée. Les diagrammes 5A, 5B, 5C, 5D présentent un quatrième exemple de restitution relatif à des images dont la durée de transmission est susceptible d'être supérieure à la moitié du laps de temps d'affichage normalement prévu pour une image.

Comme indiqué ci-dessus, le schéma proposé en figure 1 est relatif à un exemple de chaîne de transmission d'images entre une source d'images 1 et un appareil 2 distants et aptes à être interconnectés par l'intermédiaire de moyens de transmission d'informations, qui, au moins dans l'exemple choisi, sont prévus pour être partagés entre des sources et/ou récepteurs d'informations divers.

La source d'images 1 comporte un module 4, fournisseur de signaux d'images, par exemple un module de type caméra et notamment de visiophone, permettant de réaliser la prise de vue de séquences qui sont acquises chacune sous la forme d'une suite d'images constitutives où chaque image est traduite par une série de signaux déterminant un ensemble caractéristique de cette image.

Alternativement le module fournisseur 4 peut être de type enregistreur, tel un caméscope, apte à recevoir, conserver et ultérieurement retransmettre des images produites par ailleurs.

Dans la réalisation ici envisagée à titre d'exemple, où les images sont prévues transmises sous une forme numérisée, chaque image constitutive correspond à un ensemble, composé de données numériques, dont la structure est organisée d'une manière choisie et dont la taille est limitée à une valeur fixée à l'avance en fonction des possibilités respectives de la source 1, de l'appareil 2 et des moyens de transmission. L'appareil 2 comporte par exemple un module de restitution d'images 8, tel un téléviseur ou un moniteur, permettant la visualisation des images d'une séquence filmée qui émanent de la source 1 et ce à un rythme R permettant de restituer, de manière au moins réaliste et préférablement fidèle, les éventuelles animations figurant dans la séquence filmée.

Comme indiqué plus haut, si l'analyse des images a été effectuée à la cadence C de vingt-cinq ou trente images au niveau de la source 1, il est classique de prévoir un rythme R de restitution des images double de C au niveau du module de restitution 8.

L'asservissement des moyens qui fournissent les signaux de rythme R en vue de la restitution des images aux moyens qui fournissent les signaux de cadence C à la source 1 n'est parfois ni envisageable, ni souhaité, en particulier lorsque des moyens de transmission asynchrones sont prévus sur au moins une partie du trajet de transmission entre la source 1 et l'appareil 2.

Il devient alors nécessaire de pouvoir identifier sélectivement les ensembles caractéristiques de données numériques correspondant aux images d'une même séquence filmée, même si ceux-ci sont prévus transmis l'un après l'autre. ceci est obtenu ici par affectation d'un marqueur d'en-tête et d'un marqueur de fin à chaque ensemble. Chaque marqueur est constitué par une combinaison particulière de données comportant par exemple une partie distinctive fixe commune à tous les marqueurs de même type et, si nécessaire, une partie distinctive fonction d'une caractéristique relative à l'ensemble auquel ce marqueur est rattaché, par exemple fonction de la position relative de l'image correspondant à cet ensemble dans la séquence filmée qui la comporte.

Par ailleurs, la taille de ces ensembles correspondant à des images est susceptible d'être telle qu'il ne soit pas possible de transmettre un même ensemble en un seul train de données entre source et module récepteur et qu'en conséquence une transmission fractionnée au moyen de plusieurs trains de données échelonnés dans le temps soit nécessaire. La transmission de ces trains s'effectue alors en appliquant des règles communes données.

Tel est notamment le cas lorsque la transmission des ensembles entre source et appareil est susceptible d'impliquer l'usage de trains de données constitués en cellules standardisées telles que définies dans la recommandation I361 émanant du C.C.I.T.T. pour le transfert d'informations numérisées en un mode asynchrone couramment désigné par l'acronyme A.T.M.

Dans un tel cas, la source 1 comporte alors un dispositif identificateur 5 placé en aval du module fournisseur 4, ce dispositif reçoit les données numériques d'image et des signaux caractéristiques qui lui sont fournis par le module fournisseur et qui lui permettent d'identifier sélectivement les ensembles de données correspondants aux différentes images d'une séquence filmée à transmettre. Il assure notamment l'adjonction d'un marqueur individuel d'en-tête et d'un marqueur individuel de fin à chaque ensemble à transmettre.

Un dispositif de codage 6 est disposé en aval du dispositif identificateur 5 pour assurer la constitution des trains de données par l'intermédiaire desquels chaque ensemble va être transmis. Dans l'exemple envisagé, où chaque train de données correspond à une cellule de taille et d'organisation standardisées, le dispositif de codage 6 assure la conversion en cellules de chaque ensemble spécifiquement identifié par les marqueurs qui lui ont été adjoints.

Dans une forme préférée de réalisation, le dispositif de codage 6 permet aussi d'introduire des données de contrôle dans les cellules pour permettre de réaliser un certain nombre de vérifications sur les cellules reçues au niveau de l'appareil 2. Ces vérifications sont réalisées en comparant les informations fournies par les données de contrôle contenues dans les cellules avec des informations établies par l'appareil 2 à partir de ces cellules reçues par application de règles déterminées. Ces données de contrôle et les vérifications qu'elles autorisent permettent notamment de déterminer si un ensemble reçu par l'appareil 2 peut être considéré comme correspondant à l'ensemble qui a été émis par la source 1. Dans la réalisation envisagée, cette détermination de conformité d'un ensemble reçu implique que toutes les cellules émises par la source 1 qui le concerne aient été détectées comme reçues par l'appareil 2, que toutes les cellules prises en compte pour cet ensemble aient été vérifiées comme provenant de la source 1 et que chacune de ces cellules respecte les règles communes prévues pour tous les ensembles.

La transmission des cellules aux moyens de transmission par la source 1 s'effectue par l'intermédiaire d'une interface d'émission 7 qui agit en tant que mémoire tampon pour les cellules en attente de transfert et qui assure les adaptations nécessaires au transfert de ces cellules par les moyens de transmission, ces derniers étant ici symbolisés par un réseau asynchrone A.T.M. référencé 3.

L'appareil 2 est supposé relié aux moyens de transmission, ici représentés par le réseau 3, par une interface de réception 9 qui assure des fonctions inverses de celles réalisées par l'interface d'émission 7, ces interfaces dont la constitution est connue en elle-même n'étant pas détaillées ici dans la mesure où elles n'ont qu'un rapport indirect avec l'objet de la présente invention. Il en sera de même et pour les mêmes raisons pour le réseau asynchrone 3 et pour divers dispositifs de la source 1 et de l'appareil 2.

Les cellules destinées à l'appareil 2 qui sont prises en compte de manière connue en elle-même par l'interface de réception 9 y sont temporairement conservées pour être à la disposition d'un dispositif décodeur 10. Le dispositif décodeur 10 est chargé de vérifier la conformité des cellules reçues au moyen des données de contrôle qu'elles contiennent et par application des règles évoquées plus haut.

Dans une forme préférée de réalisation, les marqueurs d'en-tête et de fin d'ensemble sont détectés après vérification des cellules ayant servi à leur transfert et seuls sont conservés pour exploitation les suites de cellules correspondant à des ensembles qui peuvent être considérés comme conformes. Ceci implique que les cellules et la suite de cellules qui composent chacun de ces ensembles soient vérifiées conformes par le dispositif décodeur 10, cette conformité pouvant éventuellement n'être obtenue qu'après correction, notamment lorsqu'un code correcteur d'erreurs est mis en oeuvre lors de la constitution des cellules.

Il est aussi prévu des moyens de stockage 11 reliés au dispositif décodeur 10 et au module de restitution 8 pour pouvoir conserver temporairement les données d'image restituables contenues dans le dernier ensemble reçu considéré comme conforme par le dispositif décodeur 10.

La transmission des données d'image, contenues dans un ensemble vérifié conforme, des moyens de stockage 11 au module de restitution 8 de l'appareil 2 est temporellement contrôlée par l'intermédiaire d'une horloge de synchronisation locale 12, dénommée par la suite horloge d'appareil. Cette dernière est susceptible d'être soit incorporée dans l'appareil 2 récepteur, soit lui être extérieure, comme éventuellement d'autres composants exploités par cet appareil. Elle produit des signaux d'horloge au rythme R choisi pour la restitution des images par le module de restitution 8 et elle est agencée pour permettre de déclencher la transmission des données d'une première image des moyens de stockage 11 vers le module de restitution 8, dès qu'un premier ensemble conforme contenant ces données d'image a été reçu et stocké, pour une séquence d'images animées transmise.

Les images provenant des ensembles suivants de la séquence filmée considérée sont normalement restituées en succession par le module de restitution 8 au rythme R prévu que fournit l'horloge 12 de l'appareil. Ce rythme R correspond ordinairement à celui auquel le module 4 de la source 1 fournit les images sous le contrôle de son horloge non représentée ici.

Dans une forme connue de réalisation, la source 1 délivre vingt-cinq images par seconde, chacune étant constituée de deux trames entrelacées. La fourniture des images reçues par l'appareil au module de restitution 8 est alors normalement prévue au rythme d'une image toutes les quarante millisecondes.

Il est pratiquement admissible de reconstituer une image constituée de deux trames entrelacées à partir de l'une de ces trames par simple répétition de cette trame.

Il est donc prévu de ne transmettre qu'une trame par image de la source 1 à l'appareil 2, ce qui permet de disposer d'un laps de temps supplémentaire pour prendre en compte les trains de données parvenant pour chaque ensemble transmis à l'appareil. En effet, la durée d'enveloppe de données pour un ensemble reçu au niveau du dispositif décodeur 10 de l'appareil est à la fois tributaire du temps de codage de cet ensemble au niveau de la source 1 et du temps nécessaire à son transfert entre cette source et l'appareil 1 auquel il est transmis, ce qui conduit à ce que cette durée soit éventuellement fluctuante.

Dans le cas typique, tel qu'évoqué ci-dessus et présenté sur les diagrammes 2A à 2D, il est considéré que les durées des enveloppes de données des ensembles transmis, représentés en grisé sur le diagramme 2B, sont toujours inférieures chacune à la moitié du laps de temps normalement prévu pour l'affichage d'une image, soit un laps de temps ici supposé de quarante millisecondes et délimité par des tops dits d'ensemble reçus, tels que figurés sur le diagramme 2A.

Comme indiqué plus haut, il est possible de reconstituer en réception l'équivalent des deux trames entrelacées d'une même image par réaffichage des éléments constitutifs d'image obtenus du seul ensemble de données transmis par la source pour cette image.

Dans l'exemple envisagé, il est ainsi prévu de déclencher l'envoi des signaux d'image au module de restitution 8 à un rythme double du rythme R prévu pour l'affichage des images que fixe l'horloge 12 de l'appareil, soit ici toutes les vingt millisecondes, comme symbolisé par les tops du diagramme 2C; les signaux d'image affichés sont alors ceux qui sont déduits du dernier ensemble vérifié conforme, reçu et stocké. Le module de restitution 8 assure usuellement deux affichages successifs de chaque image obtenue d'un même ensemble, comme le symbolise le diagramme 2D représentatif des images affichées. A titre d'exemple, il est ainsi supposé que les signaux d'image référencés "i-1" du diagramme 2D sont déduits d'un ensemble transmis conforme et temporairement stocké, également référencé "i-1" sur le diagramme 2B. Ces signaux d'image "i-1" sont affichés une première fois suite à un premier signal d'horloge de l'appareil (diagramme 2C) apparaissant après vérification de conformité et stockage de l'ensemble "i-1" et pour une durée 1/2R, d'ici vingt millisecondes, et répétés au signal d'horloge de l'appareil suivant pour la même durée, l'image obtenue étant donc conservée identique durant un temps 1/R de quarante millisecondes, dans l'exemple envisagé. Pendant ce laps de temps un second ensemble référencé "i-2" est reçu, vérifié et stocké si vérifié conforme; il est pris en compte pour affichage au top d'horloge de l'appareil encore suivant comme le montre le diagramme 2C et les signaux d'image "i-2" qui en sont déduits sont également affichés deux fois, conduisant à l'apparition d'une seconde image de durée 1/R, et ainsi de suite.

Dans la mesure où l'horloge de l'appareil 2 n'est pas synchronisée sur celle de la source 1, il est envisageable qu'il y est un certain glissement entre l'horloge de la source et l'horloge de l'appareil.

Etant donné que les signaux d'image déduits d'un ensemble transmis ne sont disponibles qu'après vérification de la conformité de cet ensemble, il peut advenir que cette disponibilité n'intervienne pas dans le laps de temps prévu, notamment en raison d'un glissement entre horloges où de la non-conformité d'un ou de plusieurs ensembles successifs.

Un exemple d'une telle situation atypique due à un glissement entre horloges est symbolisé sur les diagrammes 3A à 3D qui concernent le cas où il est supposé que la disponibilité d'un ensemble "i" (diagramme 3B) intervient avant un top T1 d'horloge d'appareil (diagramme 3C) normalement prévu pour commander le second affichage des signaux de l'image précédente "i-1", alors que ceci n'était pas le cas pour les autres ensembles reçus depuis un certain temps. Dans cette situation atypique qui n'apparaît par exemple qu'avec une période de l'ordre de quelques dizaines de minutes, il est prévu de commander par le top T1 un premier affichage des signaux d'image "i" alors disponibles au lieu du second affichage des signaux d'image "i-1", comme le montre le diagramme 3D.

Ceci conduit à ce que les signaux d'image "i-1" ne soient affichés que pendant un temps 1/2R, contrairement à ceux de l'image précédente "i-2" affichés pendant un temps 1/R, cette réduction de temps d'affichage n'est pas détectable par l'usager pour lequel la qualité de service n'est donc pas dégradée.

L'ensemble "i+1" suivant ne peut normalement pas être disponible lorsque est produit le top T2 d'horloge d'appareil qui succède au top T1 précédemment considéré avec un retard égal à 1/2R, c'est donc un second affichage des signaux d'image déduits de l'ensemble "i" qui est réalisé, conduisant à une durée d'affichage globale de durée 1/R pour l'image "i". Il y a à nouveau double affichage des signaux déduits de chacun des ensembles reçus par la suite, tant qu'il n'est pas reçu d'ensemble s'avérant non conforme et que le glissement entre horloges de source et d'appareil ne conduit pas de nouveau à la situation évoquée plus haut en liaison avec le top T1 et les ensembles "i-1", "i".

Il doit être compris que lorsque le glissement entre horloges se produit en sens inverse de celui envisagé ci-dessus, il n'y a bien entendu pas d'affichage d'un ensemble en cours de réception qui n'est pas encore disponible à l'instant du top de l'horloge d'appareil qui devrait entraîner son premier affichage. Il est alors prévu d'afficher de nouveau les signaux d'image déduits du dernier ensemble reçu qui a été vérifié conforme. Cet affichage se prolonge alors pendant un temps 3/2R, supposé ici de soixante millisecondes, l'ensemble qui suit celui qui est affiché étant alors supposé vérifié conforme.

Comme dans le cas de glissement inverse envisagé plus haut, un double affichage s'étendant sur un laps de temps 1/R est rétabli pour les signaux d'image de l'ensemble, reçu et vérifié conforme, qui est disponible au moment du top d'horloge d'appareil suivant immédiatement celui ayant conduit au dernier de trois affichages successifs des signaux d'image déduits d'un même ensemble. Il y a de nouveau double affichage des signaux déduits de chacun des ensembles reçus par la suite, tant que le glissement entre horloges de source et d'appareil ne conduit pas de nouveau à la situation évoquée juste ci-dessus et qu'il n'est pas reçu d'ensemble s'avérant non conforme.

Les diagrammes 4A à 4D correspondent à une situation où les ensembles reçus comportent un ensemble "i", représenté en grisé, non affichable, car non conforme ou non susceptible d'être rendu conforme, si l'appareil est doté de moyens correcteurs appropriés. Il en sera aisément extrapolé le comportement prévu lorsque plusieurs ensembles successivement reçus sont constatés non conformes.

Dans un tel cas, si l'ensemble "i" vérifié non conforme a été précédé d'un ensemble vérifié conforme "i-1", il est prévu de continuer d'afficher les signaux d'image issus de l'ensemble "i-1" pendant le temps 1/R normalement prévu pour les signaux déduits de l'ensemble "i". L'ensemble "i-1", vérifié conforme, d'où sont déduits les signaux d'image affichés est conservé à cet effet, au moins tant qu'un nouvel ensemble, tel ici "i+1", n'a pas été vérifié conforme et stocké.

Là encore, il y a un nouveau double affichage des signaux déduits de chacun des ensembles reçus par la suite, s'il n'est pas reçu d'ensemble s'avérant non conforme et tant que le glissement entre horloges de source et d'appareil ne conduit pas de nouveau à une des situations évoquées plus haut.

D'une manière générale, lorsqu'il n'est pas possible de fournir les données d'image d'un ensemble au module de restitution 8 d'un appareil dans le délai prévu après la fourniture des données d'image d'un ensemble précédent, par exemple si l'ensemble à fournir n'est pas conforme, il est prévu de substituer aux données d'image manquante les données d'image de l'ensemble conforme reçu précédemment.

Ceci conduit donc à ce qu'une même image puisse être substituée à une ou plusieurs images immédiatement ultérieures incorrectement transmises. Dans une forme préférée de réalisation, il est prévu d'interrompre le traitement de vérification à détection de la première non-conformité non corrigible d'un ensemble et au moins jusqu'à détection du marqueur d'en tête de l'ensemble reçu suivant.

Dans la mesure où dans les conditions évoquées ci-dessus, il est nécessaire de disposer des données d'image d'un ensemble vérifié conforme pour affichage et où il doit être possible de simultanément prendre en compte les données d'image de l'ensemble normalement destiné à être affiché ensuite, il est prévu de disposer de moyens de stockage temporaire 11 au niveau de l'appareil qui soient conçus pour pouvoir simultanément contenir les données relatives à deux images, chacune dans une unité de mémoire 11A ou 11B. Ces unités sont alternativement exploitées, l'une pour stocker les données d'image vérifiées conformes d'un ensemble en cours de vérification et l'autre pour temporairement conserver les données du dernier ensemble reçu, vérifié conforme qui sont utilisées pour l'affichage d'image.

Si dans les exemples envisagés ci-dessus, il a été considéré les cas où les durées des enveloppes de données des ensembles transmis en temps réel sont toujours inférieures à 1/2R, il est par contre possible que ceci ne soit pas vérifié et que les durées d'enveloppe soient éventuellement supérieures à 1/2R tout en restant inférieures à une limite constituée par la valeur 1/R.

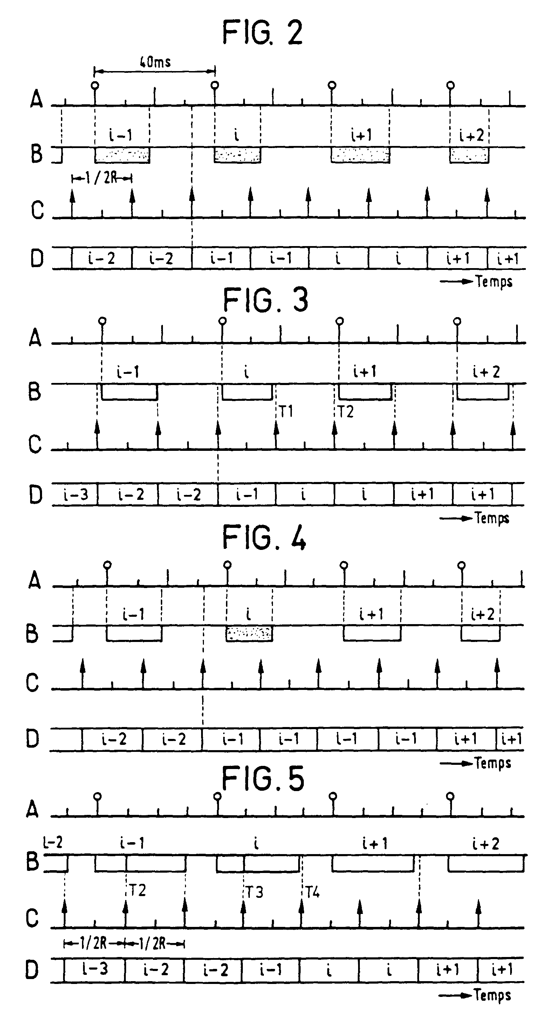

Un tel cas est envisagé sur les diagrammes de la figure 5 qui correspondent fonctionnellement aux diagrammes de la figure 2 pour des durées d'enveloppe supérieures; dans la réalisation envisagée, comme montré ci-dessous ceci implique que l'appareil soit doté de moyens de stockage supplémentaires ici supposés situés en aval du dispositif décodeur 10 par rapport aux moyens de stockage 11 de l'appareil 1.

En effet, si les enveloppes de données de différents ensembles, supposées d'une même durée pour des raisons de simplification du schéma, sont supérieures à 1/2R, comme montré sur le diagramme 5B, il apparaît clairement qu'il peut ne pas être possible d'enregistrer au moins des premières données d'enveloppe reçues pour un ensemble dans les moyens de stockage 11, lorsque des images sont en cours d'affichage. Ainsi, si l'on suppose qu'une image "i-2" correspondant à un ensemble "i-2" contenu dans une unité de mémoire, telle 11A, des moyens de stockage, est affichée, qu'un ensemble "i-1" reçu en suite est en fin d'enregistrement dans l'autre unité de mémoire 11B en vue de permettre l'affichage d'une image "i-1" au top T3 suivant et que les premières données d'un ensemble suivant "i" sont en cours de réception par l'appareil, il n'y a pas alors de mémoire disponible au niveau des moyens de stockage 11 pour ces premières données. Il n'est pas prévu de libérer l'unité de mémoire, ici 11A, contenant l'image "i-2" en cours d'affichage tant que l'image "i-1" suivante n'a pas été vérifiée conforme, puisqu'il est prévu d'afficher une nouvelle fois les données de l'ensemble "i-2" pour affichage, si l'image "i-1" s'avère défectueuse.

Pour prendre en compte ceci, il est prévu d'insérer des moyens de stockage supplémentaire 13, de type tampon, en aval du dispositif décodeur 10, par exemple dans ce dernier ou éventuellement avec les unités de mémoire 11A, 11B. Ces moyens permettent de tamponner les données en cours de réception après vérification pour laisser le temps à l'une des deux unités de mémoire d'être disponible pour les stocker, ceci correspond par exemple au tamponnage des données reçues avant le top T2 (diagramme 5C) pour l'ensemble "1-1"(diagramme 5B).

Comme précédemment, dans la mesure où il est choisi de n'afficher des signaux d'image que lorsque que l'ensemble dont ils sont issus a été vérifié conforme et stocké, il apparaît que c'est à partir du premier top d'horloge d'appareil, tel le top T3 sur le diagramme 5C pour les signaux d'image déduits de l'ensemble "i-1" du diagramme 5B, qui suit cette vérification et ce stockage qu'il est possible de commencer l'affichage de ces signaux pour des laps de temps de durée correspondant à n/2R, "n" étant un nombre entier positif.

Dans la mesure où, l'affichage des images par l'appareil est régi par l'horloge 12 de cet appareil et s'effectue systématiquement à partir des données du dernier ensemble vérifié conforme qui a été stocké, il est possible d'exploiter les moyens de stockage 11 évoquées plus haut, en association avec les moyens de stockage supplémentaire 13.

Ces moyens 11 comportent, comme indiqué, deux unités de mémoire 11A, 11B alternativement exploitées l'une pour stocker les données d'image vérifiées conformes d'un ensemble en cours de vérification et l'autre pour conserver les données du dernier ensemble vérifié conforme qui sont exploitées pour l'affichage d'image.

Il est également possible et en conséquence prévu de mettre en oeuvre le procédé de restitution de la manière évoquée en liaison avec les différents diagrammes présentés sur les figures 2 à 4, lorsque les enveloppes de données d'ensemble ont des durées restant inférieures à la valeur 1/R. Comme précédemment suivant le sens du glissement entre l'horloge de la source, telle 5A, et l'horloge de l'appareil, telle 5B, il est donc prévu soit une suppression de répétition d'une des images, en cas de besoin, soit une répétition supplémentaire d'une image. Il est également prévu d'exploiter le dernier ensemble conforme reçu pour l'affichage d'image, tant qu'aucun autre ensemble conforme n'a été stocké. Tout ceci ne sera pas développé plus avant ici dans la mesure où une description détaillée en a pratiquement été fournie plus haut en liaison avec les figures 2 à 4 et que la mise en oeuvre correspondante s'en déduit de manière simple.

## Revendications

1. Procédé de restitution d'une séquence d'images animées à un rythme (R) permettant une restitution réaliste et quasi-immédiate des animations figurant dans la séquence, à partir d'une suite d'images constitutives successivement fournies, sous une forme numérisée, par une source distante à un appareil comportant ou constituant un récepteur, avec une éventuelle reproduction visuelle d'une image pour un laps de temps égal ou éventuellement multiple du temps de présence d'image fixé par un choix de rythme de restitution d'image, lorsque des moyens de transmission asynchrones sont prévus sur au moins une partie du trajet de transmission entre la source et l'appareil, et chaque image constitutive étant respectivement transmise à l'appareil sous la forme d'un ensemble indépendant de trains successifs de données organisés selon des règles communes aux ensembles qui ont une même taille maximale possible et qui sont individualisés par deux marqueurs individuels d'image, positionnés l'un en en-tête et l'autre en fin de chaque ensemble, ledit procédé prévoit une génération locale et autonome du rythme de restitution et une réalisation répétitive des opérations suivantes, à la réception:
- reconstitution de chaque ensemble, transmis de manière conforme par l'intermédiaire de trains de données, après vérification de la conformité et de l'ordre de succession des trains de données successivement reçus pour cet ensemble,
- stockage temporaire d'au moins le dernier ensemble vérifié conforme jusqu'alors reçu,
- reproduction visuelle, pour un laps de temps égal ou éventuellement multiple du temps de présence d'image fixé par le choix du rythme de restitution, de l'image correspondant au dernier ensemble conforme, reçu et stocké.

2. Procédé de restitution selon la revendication 1, pour séquence filmée où chaque image est reconstituée au moyen de deux trames entrelacées, **caractérisé en que** l'ensemble propre à chaque image transmise est constitué à partir des données relatives à une seule des deux trames que comporte cette image, chaque ensemble transmis conforme, normalement prévu reproduit visuellement deux fois au cours d'un même temps de présence d'image, étant éventuellement reproduit visuellement un nombre différent de fois, en cas de besoin lorsqu'il existe une différence génératrice de glissement entre le rythme de restitution (R) et le rythme de régie à l'émission de la séquence et/ou en cas de non-conformité d'au moins un ensemble reçu.

3. Appareil permettant notamment la restitution quasi-immédiate d'une séquence d'images animées à un rythme R de restitution visuelle réaliste de la séquence, à partir d'une suite d'images successivement fournies, sous une forme numérisée, par une source distante à un appareil comportant ou constituant un récepteur, lorsque des moyens de transmission asynchrones (3) sont prévus sur au moins une partie du trajet de transmission entre la source et l'appareil chaque image est transmise sous la forme d'un ensemble indépendant de trains successifs de données organisés selon des règles communes aux ensembles, ces derniers étant individualisés chacun, notamment par deux marqueurs respectivement positionnés l'un en en-tête et l'autre en fin de chaque ensemble, ledit appareil disposant localement, en interne ou en externe, de moyens (10) pour vérifier la conformité aux règles de chaque train de données reçu et de chaque suite de trains constituant un ensemble individualisé, de moyens (11) pour temporairement stocker au moins le dernier ensemble conforme obtenu, des moyens (8) pour reconstituer les signaux nécessaires à la reproduction visuelle d'une image à partir des données numériques stockées dudit dernier ensemble obtenu conforme et comportant des moyens autonomes et locaux (12) d'horloge pour générer le rythme de restitution nécessaire au déclenchement de la reproduction visuelle, pour un laps de temps égal ou éventuellement multiple du temps de présence d'image fixé par le choix du rythme de restitution, de l'image correspondant au dernier ensemble conforme alors temporairement stocké.

4. Appareil selon la revendication 3, **caractérisé en ce qu'**il comporte des moyens (13) de stockage supplémentaire, disposés en aval des moyens (10) de vérification pour les données d'ensemble en cours de réception.

## Patentansprüche

1. Verfahren zum Wiedergeben einer Folge von bewegten Bildern mit einem Rhythmus (R), der eine realistische und quasi-unmittelbare Wiedergabe der in der Folge vorkommenden Bewegungen ermöglicht, ausgehend von einer Folge von nacheinander in digitaler Form von einer entfernten Quelle an ein einen Empfänger umfassendes oder bildendes Gerät gelieferten konstitutiven Bildern, mit eventueller visueller Wiedergabe eines Bildes für eine Zeitspanne, die gleich einer durch eine Auswahl eines Bildwiedergaberythmus festgelegten Anwesenheitszeit eines Bildes oder eines Vielfachen davon ist, wobei asynchrone Übertragungsmittel auf wenigstens einen Teil des Übertragungsweges zwischen der Quelle und dem Gerät vorgesehen sind und jedes konstitutive Bild jeweils an das Gerät in Form eines unabhängigen Ensembles von aufeinanderfolgenden Datenzügen geliefert wird, die nach Regeln organisiert sind, die den Ensembles, die eine gleiche maximale Größe haben, gemeinsam sind, und die durch zwei individuelle Bildmarker individualisiert sind, von denen der eine am Anfang und der andere am Ende jedes Ensembles positioniert ist, wobei das Verfahren eine lokale und autonome Erzeugung des Wiedergabetakts und eine wiederholte Ausführung der folgenden Operationen beim Empfang umfasst:
- Wiederherstellung jedes Ensembles, das regelgemäß über Datenzüge übertragen worden ist, nach Überprüfung der Regelgemäßheit und der Abfolge der nacheinander für dieses Ensemble empfangenen Datenzüge,
- zeitweilige Speicherung wenigstens des letzten bis dahin empfangenen überprüften, regelgemäßen Ensembles,
- visuelle Wiedergabe des Bildes, das dem letzten empfangenen und gespeicherten regelgemäßen Ensemble entspricht, für eine Zeitspanne gleich der durch die Auswahl des Wiedergaberythmus festgelegten Anwesenheitszeit oder eines Vielfachen davon.

2. Wiedergabeverfahren nach Anspruch 1 für eine gefilmte Folge, wo jedes Bild mit Hilfe zweier verschachtelter Rahmen wieder hergestellt wird, **dadurch gekennzeichnet, dass** das zu jedem übertragenen Bild gehörende Ensemble aus Daten gebildet wird, die nur auf einen der zwei Rahmen, die dieses Bild umfasst, bezogen sind, wobei jedes übertragene regelgemäße Ensemble, das normalerweise vorgesehen ist, um im Laufe einer gleichen Bildanwesenheitszeit zweimal visuell wiedergegeben zu werden, gegebenenfalls bei Bedarf eine andere Zahl von Malen wiedergegeben wird, wenn es eine zu einer Verschiebung führende Differenz zwischen dem Wiedergaberythmus (R) und dem Steuerrhythmus beim Senden der Folge und/oder einen Fall von Nicht-Regelgemäßheit wenigstens eines empfangenen Ensembles gibt.

3. Gerät, insbesondere für die quasi-unmittelbare Wiedergabe einer Folge von bewegten Bildern mit einem Rhythmus (R) zur realistischen visuellen Wiedergabe der Folge ausgehend von einer Folge von nacheinander in digitaler Form von einer entfernten Quelle an ein einen Empfänger umfassendes oder bildendes Gerät gelieferten Bildern, wobei asynchrone Übertragungsmittel (3) auf wenigstens einem Teil des Übertragungsweges zwischen der Quelle und dem Gerät vorgesehen sind und jedes Bild in Form eines unabhängigen Ensembles von aufeinanderfolgenden Datenzügen übertragen wird, die nach den Ensembles gemeinsamen Regeln organisiert sind, wobei die Ensembles jeweils durch zwei Marker individualisiert sind, von denen der eine am Anfang und der andere am Ende jedes Ensembles positioniert ist, wobei das Gerät lokal, intern oder extern, über Mittel (10) zum Überprüfen der Regelgemäßheit jedes empfangenen Datenzuges und jeder ein individualisiertes Ensemble bildenden Folge von Zügen, über Mittel zum zeitweiligen Speichern wenigstens des letzten erhaltenen regelgemäßen Ensembles, über Mittel (8) zum Wiederherstellen der für die visuelle Wiedergabe eines Bildes benötigten Signale anhand der gespeicherten digitalen Daten des letzten erhaltenen regelgemäßen Ensembles verfugt und autonome und lokale Taktmittel (12) zum Erzeugen des Wiedergaberythmus umfasst, der für das Auslösen der visuellen Wiedergabe des Bildes, das dem letzten dann zeitweilig gespeicherten regelgemäßen Ensemble entspricht, für eine Zeitspanne erforderlich ist, die gleich der durch die Auswahl des Wiedergaberythmus festgelegten Bildanwesenheitszeit oder einem Vielfachen davon ist.

4. Gerät nach Anspruch 3, **dadurch gekennzeichnet, dass** es für die Daten des Ensembles, welches soeben empfangen wird, über zusätzliche Speichermittel (13) verfügt, die hinter den Überprüfungsmitteln (10) angeordnet sind.

## Claims

1. A method of playing back a sequence of animated images at a rate (R) enabling realistic and almost instantaneous playback of any animations that appear in the sequence, on the basis of a run of component images supplied in succession and in digital form by a remote source to an apparatus that includes or that constitutes a receiver, with optional visual reproduction of an image for a time lapse that is equal to the image-presence time fixed by a chosen image playback rate, or optionally to a multiple of that time, with asynchronous transmission means being provided on at least a portion of the transmission path between the source and the apparatus, and each component image being respectively transmitted to the apparatus in the form of an independent set of successive data trains organized in application of rules common to the sets, which sets have a common maximum possible size and are individualized by two individual image markers, one positioned as a header and the other at the end of each set, said method providing for local and self-contained generation of the playback rate and for the following operations to be performed repetitively on reception:
each set that has been transmitted validly by means of data trains is reconstituted after verifying the validity and the serial order of the data trains successively received for said set;
at least the most recently received set that has been verified as being valid is stored temporarily; and
the image corresponding to the most recently received and stored valid set is played back visually for a time lapse that is equal to the image-presence time fixed by the chosen playback rate, or optionally to a multiple of that time.

2. A playback method according to claim 1, for a filmed sequence in which each image is played back by means of two interlaced fields, **characterized in that** the set belonging to each transmitted image is constituted on the basis of data relating to one only of the two fields constituting said image, each valid transmitted set being normally intended for visual reproduction twice over during a single image presence time, and being possibly visually reproduced some other number of times, should that be necessary, in the event that there exists a slip-generating difference between the playback rate (R) and the rate governing the sequence as sent and/or in the event of at least one received set being found to be invalid.

3. Apparatus serving in particular to play back almost instantaneously a sequence of animated images at a realistic visual playback rate R for the sequence on the basis of a run of images supplied successively in digitized form by a remote source to an apparatus including or constituting a receiver, with asynchronous transmission means (3) being provided on at least a portion of the transmission path between the source and the apparatus, and each image being transmitted in the form of an independent set of successive data trains organized in application of rules that are common to the sets, each set being individualized in particular by two markers, one being placed as a header and the other being placed at the end of each set, said apparatus having locally available, internally or externally, means (10) for verifying that each received data train and each run of data trains making up an individualized set is valid, i.e. complies with the rules, means (11) for temporarily storing at least the most recently obtained valid set, means (8) for reconstituting the signals required for visual reproduction of said most recently received valid set, and including local and self-contained clock means (12) for generating the playback rate required for triggering visual reproduction, for a time lapse that is equal to the image-presence time fixed by the chosen playback rate, or optionally to a multiple of that time, of the image corresponding to the most recently received valid set that is then being stored temporarily.

4. Apparatus according to claim 3, **characterized in that** it includes additional storage means (13) disposed downstream from the means (10) for verifying the data of the set that is being received.
